Europäisches Patentamt

European Patent Office

Office européen des brevets

(19)

(11) Veröffentlichungsnummer: **0 343 617**

**A2**

(12) **EUROPÄISCHE PATENTANMELDUNG**

(21) Anmeldenummer: **89109340.3**

(22) Anmeldetag: **24.05.89**

(51) Int. Cl.4: **B23Q 1/26**

(30) Priorität: **26.05.88 DE 3817774**

(43) Veröffentlichungstag der Anmeldung:
**29.11.89 Patentblatt 89/48**

(84) Benannte Vertragsstaaten:
**AT BE CH DE ES FR GB GR IT LI LU NL SE**

(71) Anmelder: **Koukal, Anton**
**Schumannweg 9**
**D-7325 Boll(DE)**

(72) Erfinder: **Koukal, Anton**
**Schumannweg 9**
**D-7325 Boll(DE)**

(74) Vertreter: **Lutz, Johannes Dieter, Dr.**
**Hohentwielstrasse 41**
**D-7000 Stuttgart 1(DE)**

(54) **Führungsvorrichtung für das Portal einer in Portal-Bauweise erstellten Bearbeitungsmaschine.**

(57) Bei einer Führungs-Vorrichtung für das Portal einer in Portal-Bauweise erstellten Bearbeitungsmaschine, insbesondere einer Fräsmaschine oder einer Bohrmaschine, sind die Laufrollen des Portals, über welche sich dieses an Laufflächen des Maschinengestells abstützt, als Pendel-Wälzlager ausgebildet. Desgleichen sind Führungs-Rollen, die beidseits von Längs-Führungs-Profilstäben angeordnet sind und an deren vertikalen Längsflächen abwälzbar sind, als Pendel-Wälzlager ausgebildet. Diese Führungsrollen sind exzentrisch gelagert und können durch Drehen und Feststellen der Exzenterkörper in Anlage mit den Führungsflächen einjustiert werden.

EP 0 343 617 A2

Fig. 2

## Führungsvorrichtung für das Portal einer in Portal-Bauweise erstellten Bearbeitungsmaschine

Die Erfindung betrifft eine Führungs-Vorrichtung für das - über einem Maschinentisch, z.B. in dessen Längsrichtung gesteuert hin- und her-verfahrbare - Portal einer in Portal-Bauweise erstellten Bearbeitungsmaschine für die Bearbeitung großer, Kantenlängen um 2 bis 4 m aufweisender, Holz-, Sperrholz-, Preßspan- oder Kunststoff-Rohmaterialplatten, insbesondere eine Fräsmaschine oder eine Bohrmaschine, deren Werkzeugkopf quer zu der Bewegungsrichtung des Portals an diesem seinerseits gesteuert hin- und her-verfahrbar angeordnet ist, mit um portalfeste Drehachsen an diesem gelagerten Führungsrollen, die an einander gegenüberliegenden Führungsflächen eines Längsführungsprofils abwälzbar sind, und mit an den Portalsäulen angeordneten Stützrollen, mittels derer das Portal verfahrbar an dem Maschinengestell abgestützt ist, wobei an jeder der Portalsäulen mindestens zwei solcher, durch die äußeren Ringe von Wälzlagern gebildete Stützrollen vorgesehen sind, die beidseits der den Schwerpunkt des Portals enthaltenden vertikalen Quermittelebene des Portals in einem Abstand von dieser Ebene angeordnet und um parallel zu dieser verlaufende, horizontale Achsen drehbar sind und sich auf parallelen, horizontalen Stützflächen des Maschinengestellts abwälzen können.

Derartige Führungsvorrichtungen müssen insbesondere den Forderungen nach einer hohen Führungsgenauigkeit, hoher Standfestigkeit trotz hoher Belastung und geringer Reibungsverluste, letzteres sowohl unter dem Gesichtspunkt der Verschleißminderung als auch der Beschränkung der erforderlichen installierten Antriebsleistung für die Vorschub-Antriebe, in einem weitestmöglichen Umfang genügen.

Der zur Erfüllung dieser Forderung erforderliche technische Aufwand ist erheblich:

eine kreiszylindrische Ausbildung der Mantelflächen, mit denen sich die Rollen an den Laufflächen abwälzen, vorausgesetzt, müssen die Drehachsen der Rollen sehr genau parallel zu den Laufflächen verlaufen, und diese müssen wiederum über ihre gesamte Länge, die mehrere Meter, z.B. 4 bis m, betragen kann, genau planeben sein, was in praxi eine höchst aufwendige Schleifbearbeitung der Laufflächen erfordert. Des weiteren müssen die Drehachsen der Stützrollen auch sehr exakt rechtwinklig zur Vorschubrichtung verlaufen, da schon geringfügige Abweichungen der Drehachsen der Stützrollen von einem solchen Verlauf dazu führen, daß die Rollen nicht nur Abwälzbewegungen, sondern auch Gleitbewegungen relativ zu der Lauffläche ausführen, was in Anbetracht des - in der Regel hohen - Portalgewichtes zu drastischen Reibungsverlusten und entsprechend hohem Verschleiß der Stützrollen und/oder der Laufflächen führt. Die hiernach erforderliche lagerichtige Montage der Stützrollen muß sehr präzise sein und bedingt einen hohen konstruktiven Aufwand, nicht nur der Lagerung und Befestigung der Stützrollen selbst, sondern auch des Portals insgesamt, das in sich absolut steif sein muß, damit die genannte Anordnung der Rollen-Drehachsen im Betrieb der Maschine wenigstens innerhalb hinnehmbarer Toleranzen erhalten bleibt. Auch hiermit ist erheblicher, sich insbesondere in einem hohen Gewicht des Portals niederschlagender konstruktiver Aufwand verknüpft, der auch eine entsprechend leistungsstarke Auslegung der Vorschub-Antrieb bedingt. Diese insgesamt hat zur Folge, daß die Führungsvorrichtungen von Portalmaschinen in einem erheblichen Umfang deren Preis bestimmen.

Aufgabe der Erfindung ist es daher, eine Führungsvorrichtung der eingangs genannten Art dahingehend zu verbessern, daß sie ohne Einbuße an Führungsgenauigkeit weitestgehende Verschleißfreiheit gewährleistet und darüber hinaus wesentlich preisgünstiger herstellbar ist.

Diese Aufgabe wird erfindungsgemäß dadurch gelöst, daß mindestens die Stützrollen des Portals durch die äußeren Lagerringe von Pendel-Wälzlagern gebildet sind.

Hierdurch werden zumindest die folgenden Vorteile erzielt:

Dadurch, daß sich die durch die äußeren Lagerringe der Pendel-Wälzlager gebildeten Rollenkörper stets in die durch die Anordnung der Führungsrollen bestimmte Vorschub-Richtung orientieren können, werden, auch wenn die Achsen der Stütz-Rollen nicht genau rechtwinklig zur Bewegungsrichtung verlaufen, werden Gleitbewegungen der Stützrollen relativ zu ihren Maschinengestellfesten Laufflächen ausgeschlossen, zumindest auf ein mit Orientierungsbewegungen verknüpftes Minimum beschränkt, wodurch Reibungsverluste minimiert werden.

Auch wenn die Laufflächen nicht exakt eben sind, z.B. derart, daß sie eine "Verwindung" aufweisen, dahingehend, daß sie, über die Länge gesehen, eine "Verwindung" von einigen Winkelgraden bezüglich der Horizontalen aufweisen, so führt dies, da sich die Rollenkörper dieser "Verwindung" anpassen können, nicht dazu, daß an ihrem inneren oder äußeren kreisförmigen Rand unterschiedliche Pressungen auftreten, die ansonsten dazu führen würden, daß in den Laufflächen Rillenbildungen und/oder an den Rand-Umfangskanten der Stützrollen verstärkte Belastungen und damit Abnutzungen auftreten.

Da bei der erfindungsgemäßen Führungsvorrichtung die Rollenkörper auch dann die für eine verschleißfreie Abwälzung an den Laufflächen erforderliche Orientierung ihrer Drehachse einnehmen können, wenn ein ihren inneren Lagerring tragender Lagerbolzen nur einseitig befestigt ist und somit unter der Last des Portals geringfügige Durchbiegungen erfahren kann und/oder, wenn das Portal insgesamt nicht absolut biegesteif ausgebildet ist, sondern geringfügige Durchbiegungen erfahren kann, wenn der Werkzeugkopf in Querrichtung, entlang des Portal-Joches, verfahren wird, kann auch eine, verglichen mit bekannten Portalmaschinen, "geringere Stabilität" des Portals insgesamt in Kauf genommen werden, das somit in einer leichteren, gleichwohl eine hinreichend genaue Bearbeitung eines Werkstückes ermöglichenden Bauweise ausgeführt werden kann.

Die erfindungsgemäße Führungsvorrichtung ermöglicht daher die Erfüllung der eingangs genannten Forderungen mit wesentlich geringerem technischem Aufwand ohne Einbuße an Funktionsfähigkeit und Bearbeitungspräzision der Portalmaschine insgesamt.

In bevorzugter Gestaltung der Führungsvorrichtung sind nicht nur deren Portal-Stützrollen, sondern auch die Führungsrollen, welche für die Gerad-Führung des Portals vermitteln, als Pendel-Wälzlager ausgebildet, so daß die vorstehend genannten Vorteile sinngemäß für die - weniger belasteten - Führungsrollen und deren Laufflächen ausnutzbar sind.

Besonders vorteilhaft ist sowohl für die Stütz- bzw. Portal-Laufrollen sowie für die Führungsrollen eine Gestaltung derselben als Pendel-Kugellager, die Ausgleichsorientierungen der Rollenkörper in einem größeren Winkelbereich zulassen als z.B. Pendellager mit tonnenförmigen Wälzkörpern.

Durch die Merkmale des Anspruchs 4 ist eine Gestaltung der Laufflächen für die Stützrollen des Portals angegeben, die mit handelsüblichen Stahlbändern und Aluminium-Flachstäben sowie Klebstoffen und Kunststoff-Vergußmassen einfach und gleichwohl hoher Präzision hinsichtlich der Parallelität und Ebenheit der Laufflächen realisierbar ist.

Die gemäß Anspruch 5 vorgesehene, von Zeit zu Zeit erforderliche Wartungsarbeiten an den Stützrollen erleichternde Anordnung derselben ist möglich, da die Stützrollen als Pendel-Wälzlager ausgebildet sind.

Die gemäß Anspruch 6 vorgesehene Lagerung der Führungsrollen, die sich, beidseits der Laufflächen an den dazu rechtwinkligen, schmalen Längskanten eines Führungsprofils abwälzen können, ermöglicht auf einfache Weise eine Justierung der Führungsrollen dahingehend, daß diese satt an ihren Laufflächen anliegen, die ebenfalls durch auf ein Tragprofil aufgeklebte, vorzugsweise gehärtete, Stahlbänder gebildet sein können.

Weitere Einzelheiten und Merkmale der Erfindung ergeben sich aus der nachfolgenden Beschreibung eines speziellen Ausführungsbeispiels anhand der Zeichnung. Es zeigen:

Fig. 1 ein spezielles Ausführungsbeispiel einer erfindungsgemäßen Führungsvorrichtung, mittels derer das Portal einer Portal-Maschine an Längsträgern ihres Maschinengestelles hin- und herverschiebbar geführt ist, in vereinfachter, teilweise abgebrochener schematischer Draufsicht,

Fig. 2 eine Teilansicht der Portalmaschine gemäß Figur 1 sowie Einzelheiten ihrer Führungsvorrichtung, teilweise im Schnitt längs der Linie II-II der Figur 1,

Fig. 3 eine im Rahmen der Führungsvorrichtung gemäß den Figuren 1 und 2 vorgesehene Justiereinrichtung zur Anpassung des seitlichen Abstandes von Führungsrollen an die Breite einer Führungsschiene, in vereinfachter, teilweise abgebrochener Draufsicht und

Fig. 4 die Justiereinrichtung gemäß Figur 3 im Schnitt längs deren Linie IV-IV.

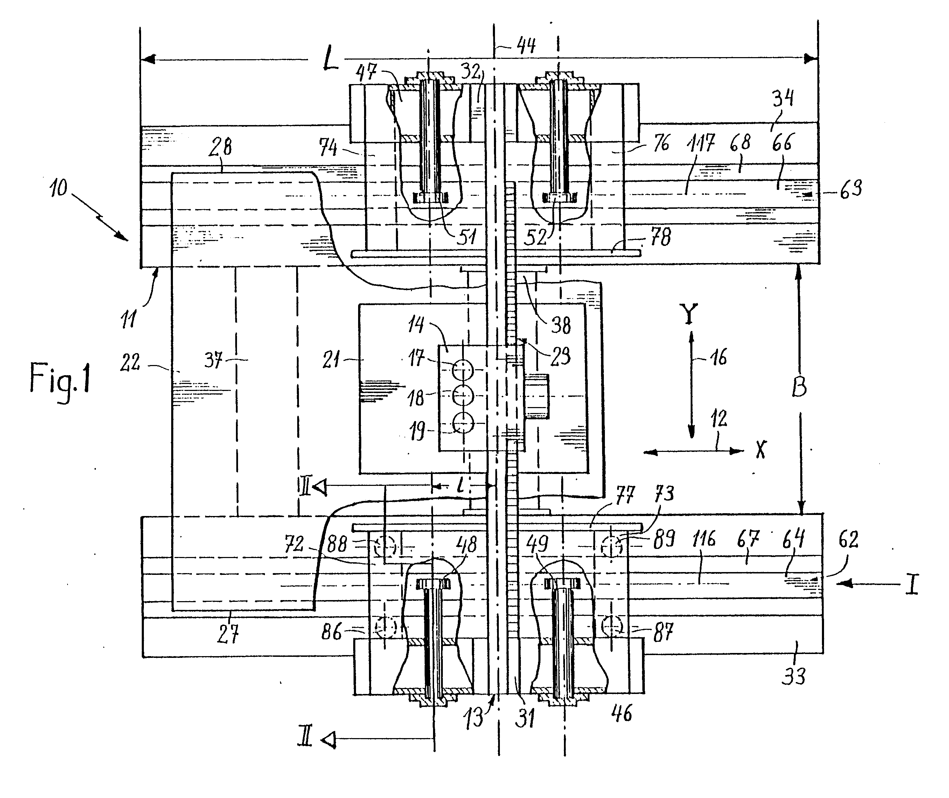

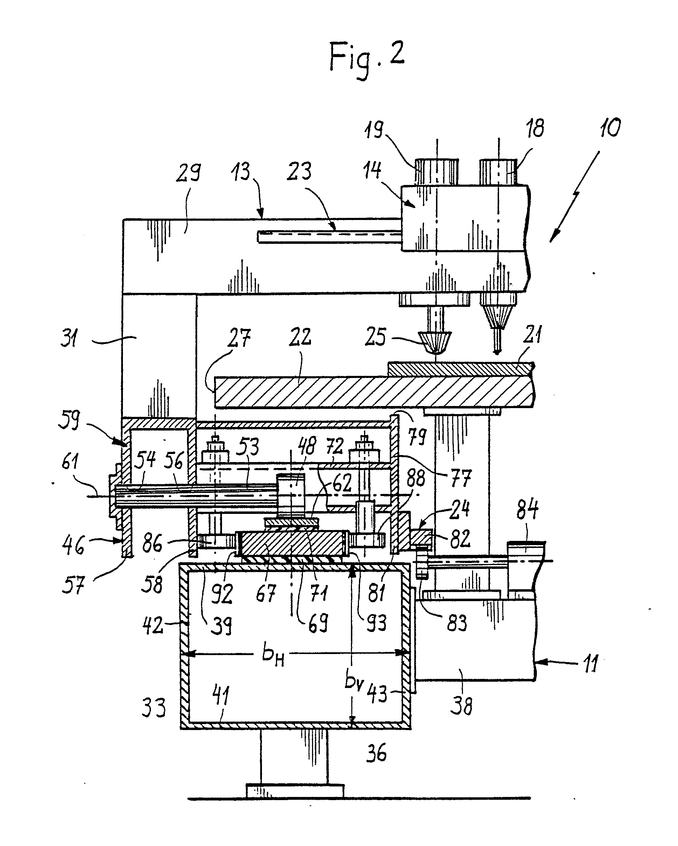

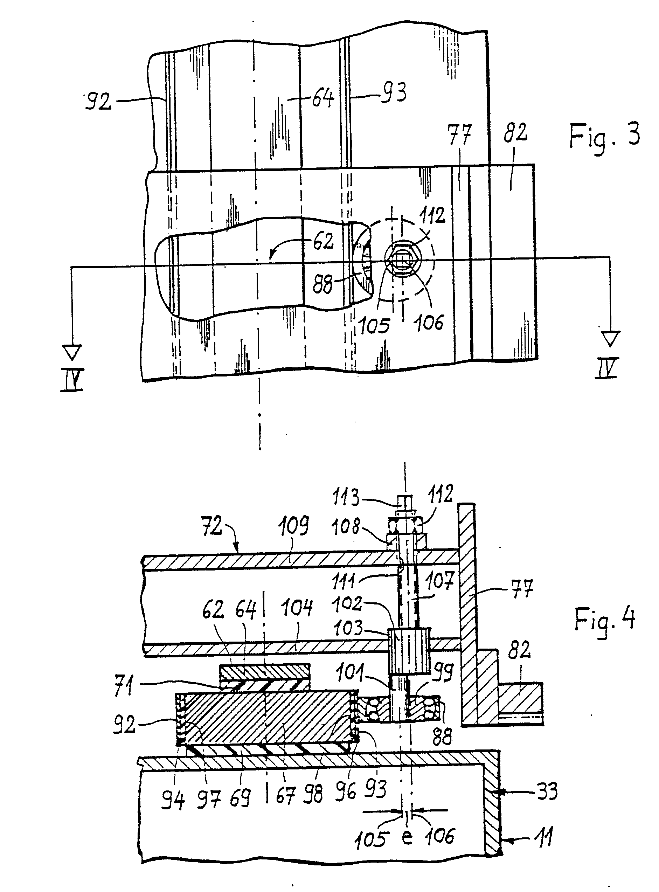

Die in den Figuren 1 und 2, auf deren Einzelheiten zunächst verwiesen sei, dargestellte, insgesamt mit 10 bezeichnete Portalmaschine umfaßt ein insgesamt mit 11 bezeichnetes Maschinengestell und ein auf diesem in der durch den Pfeil 12 repräsentierten Längsrichtung, der X-Richtung gesteuert hin- und her-verfahrbares, insgesamt mit 13 bezeichnetes Portal, an dem ein Bearbeitungskopf 14, in der zur X-Richtung 12 durch den Pfeil 16 repräsentierten Y-Richtung seinerseits gesteuert hin- und her-verfahrbar angeordnet ist. Der Bearbeitungskopf 14 kann mit mehreren Werkzeugköpfen 17, 18 und 19 bestückt sein, z.B. Bohrköpfen 17 und 18 für Bohrungen unterschiedlichen Durchmessers und mit einem Fräskopf 19.

Mit einer derartigen Werkzeug-Bestückung eignet sich die dargestellte Portalmaschine 10 insbesondere für eine Bearbeitung von Holz-, Preßspan- oder Kunststoffplatten, aus denen z.B. Möbel hergestellt werden sollen.

Es versteht sich jedoch, daß Portal-Maschinen des dargestellten Typs auch mit anderen Werkzeugen bestückt sein können, z.B. ·Schneidbrennern oder Schneid-Lasern, ggf. auch mit Wasserstrahl-Schneid-Einheiten.

Mit einer derartigen Werkzeugbestückung ist eine Portalmaschine 10 des dargestellten Typs für die Metallbearbeitung, insbesondere das Zuschneiden von Metallplatten, einsetzbar.

Für das dargestellte Ausführungsbeispiel sei, ohne Beschränkung der Allgemeinheit. d.h. lediglich zum Zweck der Erläuterung, vorausgesetzt, daß die Portalmaschine 10 für eine Bearbeitung plattenförmiger Werkstücke 21 aus Holz oder Kunststoff ausgelegt sein soll. die auf nichtdargestellte Weise an dem einen Teil des Maschinengestells 11 bildenden Maschinentisch 22 festlegbar sein sollen.

Die Steuerung der Bahnbewegungen eines Werkzeuges, z.B. eines Fräsers 25 oder das Aufsuchen von Bohrungs-Positionen kann dabei nachlaufgesteuert, d.h. z.B. durch fotoelektrische Abtastung einer Zeichnungs-Vorlage erfolgen, oder auch numerisch (CNC-) gesteuert erfolgen, wobei die diesbezüglichen Steuerungseinrichtungen, die in für sich bekannter Weise realisiert sein können, lediglich durch Zahnstangentriebe 23 bzw. 24 repräsentiert sind, mittels derer der Bearbeitungskopf 14 in Y-Richtung 16 und das Portal 13 insgesamt in der X-Richtung 12 antreibbar sind.

Das Portal 13 hat ein seitlich deutlich über die Längsränder 27 und 28 des Maschinentisches 22 hinaus ragendes Joch 29, das als hochkant stehende, massive Platte aus Aluminium oder Stahl ausgebildet ist.

Die vertikalen Portalsäulen 31 und 32 sind als stabile Stahl-Hohlprofile mit quadratischem oder rechteckigem Querschnitt dargestellt, welche seitlich in geringem Abstand an den Längsrändern 27 und 28 des Maschinentisches 22 vorbeitreten.

Das Maschinengestell 11 umfaßt zwei als stabile Rechteck-Hohlprofile 33 und 34 ausgebildete Längsträger, die in typischer Auslegung der Maschine eine Länge L von 6 m haben und in einem seitlichen lichten Abstand B von 2,5 m parallel zueinander verlaufend angeordnet und über kurze Standsäulen 36, die im Abstand über die Länge der Längsträger verteilt angeordnet sind, am Boden der jeweiligen Werkshalle abgestützt sind.

Die beiden Längsträger 33 und 34 sind durch je einen äußeren Querträger 37 und einen inneren Querträger 38 lösbar fest miteinander verbunden, wobei sich der äußere Querträger 37 zwischen in Querrichtung einander benachbarten Endabschnitten der beiden Längsträger 33 und 34 und der innere Querträger 38 sich zwischen den Mittelabschnitten der beiden Längsträger 33 und 34 horizontal erstrecken. Die Längsträger 33 und 34 sind so angeordnet, daß ihre breiteren Profilschenkel 39 und 41 horizontal und ihre etwas schmäleren Profilschenkel 42 und 43 vertikal verlaufen.

In einer typischen Auslegung der Längsträger 33 und 34 beträgt die jeweils zwischen den äußeren Profilkanten gemessene Breite $b_H$ um 35 cm, während ihre vertikale "Breite" $b_V$ einen Wert um 30 cm hat.

Die Dicken der Profilschenkel 39 und 41 bzw. 42 und 43 betragen um 10 mm. Die jeweils äußeren, vertikalen Längsschenkel 42 der Längsträger 33 und 34 sind so angeordnet, daß sie mit den äußeren Längsrand-Flächen 27 des Maschinentisches 22 in einer gemeinsamen vertikalen Ebene liegen.

Die unteren Enden der Säulen 31 und 32 des Portals 13, das, abgesehen von der Ausbildung des Bearbeitungskopfes 14, symmetrisch bezüglich seiner vertikalen in Y-Richtung 16 verlaufenden Längsmittelebene 44 ausgebildet ist, sind als Lagerkästen 46 und 47 für portalfest gelagerte Stütz-bzw. Laufrollen 48 und 49 sowie 51 und 52 ausgebildet, mittels derer das Portal 13 insgesamt in X-Richtung 12 geführt hin- und herverfahrbar ist.

Diese Rollen 48, 49, 51 und 52 sind durch die Außenringe von Pendel-Kugellagern gebildet, z.B. Pendel-Kugellagern nach der Deutschen Industrie-Norm DIN 630, wobei die Innenringe dieser Pendel-Kugellager auf die freien Enden von stabilen Lager-Bolzen 53 aufgesetzt sind, die in miteinander fluchtenden Bohrungen 54 und 56 zueinander paralleler Schenkel 57 und 58 eines sich horizontal in X-Richtung erstreckenden Kastenprofils 59 drehfest gelagert und gehalten sind, das den unteren Teil je einer der beiden Portalsäulen 31 bzw. 32 bildet.

Das Kastenprofil 59 ist beim dargestellten, speziellen Ausführungsbeispiel als nach unten offenes U-Stahlprofil ausgebildet, bei dem der lichte Abstand seiner beiden vertikalen Profilschenkel 57 und 58 annähernd und etwa der halben Länge der Lagerbolzen 53 entspricht.

Die Anordnung dieser Lagerbolzen 53 ist so getroffen, daß ihre zentralen Längsachsen 61 parallel zueinander verlaufend sich horizontal in Y-Richtung 16 erstrecken, wobei die zentralen Achsen 61 der einander jeweils gegenüber liegend angeordneten Rollen 48 und 51 sowie 49 und 52 der beiden Lagerkästen 46 und 47 jeweils paarweise miteinander fluchtend angeordnet sind. Diese zentralen Achsen 61 der Lagerbolzen 53, durch deren Verlauf, zumindest näherungsweise die jeweiligen Drehachsen der einzelnen Laufrollen 48 und 49 bzw. 51 und 52 markiert sind, sind, beidseits der vertikalen Längsmittelebene 44 des Portals 13 in einem deutlichen Abstand 1 von dieser angeordnet, der beim gewählten Erläuterungsbeispiel ca. 60 cm beträgt, um eine gute "Standfestigkeit" des Portals 13 zu gewährleisten.

Die Laufflächen 62 und 63, auf denen sich die durch die Außenringe der Pendel-Kugellager gebildeten Laufrollen 48 und 49 bzw. 51 und 52 abwälzen, wenn das Portal 13 in X-Richtung 12 verfahren wird, sind durch die Oberseiten von gehärteten, 1 bis 2 mm dicken Stahlbändern 64 und 66 gebildet, die sehr gut glatte und ebene Oberflächen haben. Diese Stahlbänder 64 und 66, die sich über die gesamte Länge L der Längsträger 33 und 34 des Maschinengestells 11 erstrecken und eine Breite haben, die etwa der doppelten Breite der Laufmantelflächen der Laufrollen 48 und 49 bzw. 51 und 52 entspricht, sind auf dem Querschnitt nach flach-rechteckige Führungs-Profilstäbe 67 bzw. 68 mit der z.B. aus den Figuren 1 und 2 erkennbaren Anordnung aufgeklebt, welche sich ihrerseits über die gesamte Länge L der Längsträger 33 und 34 des Maschinengestells erstrecken. Diese Führungs-Profilstäbe, deren Breite in typischer Gestaltung nur wenig geringer ist als die horizontale Breite $b_H$ der Längsträger-Hohlprofile 33 und 34, sind mit diesen über eine dünne Ausgleichsschicht 69 verbunden, die aus einem aushärtbaren Kunststoff, z.B. einen gießfähigen Polyester-Harz gebildet ist, das, bevor die Führungs-Profilstäbe 68 und 69 auf die Längsträger-Hohlprofile 33 und 34 aufgelegt und an diesen ggf. durch zusätzliche Befestigungsmittel, z.B. Schrauben, befestigt werden, auf die Oberseiten der horizontalen Profilschenkel 39 dieser Längsträger-Hohlprofile 33 und 34 aufgetragen worden ist.

Durch die Anordnung der Ausgleichsschicht 69 zwischen den die Stahlbänder 64 bzw. 66 tragenden Führungs-Profilstäben 67 bzw. 68 und den unterhalb dieser angeordneten Längsträger-Profilen 33 bzw. 34 wird die erwünscht parallele, vorzugsweise koplanare, horizontale Anordnung der Laufflächen 62 und 63 der Stahlbänder 64 und 66, auf denen sich die Stütz- und Laufrollen 48 und 49 sowie 51 und 52 abwälzen, wesentlich vereinfacht, ohne daß hierzu eine hochgenaue, z.B. fräsende oder schleifende Oberflächen-Bearbeitung dieser Laufflächen 62 und 63 erforderlich wäre.

Die Führungsprofilstäbe 67 und 68 können daher ohne weiteres aus üblichen, z.B. im Walzverfahren hergestellten, Aluminiumtafeln ausgeschnitten werden, die als Rohmaterial für die verschiedensten Zwecke geliefert werden. Die Ebenheit und Plan-Parallelität der Oberflächen solcher Tafeln ist hinreichend um in Verbindung mit der Ausgleichsschicht 69 und der Klebstoffschicht 71 eine hinreichende Plan-Parallelität der Laufflächen 62 und 63 für die Laufrollen 48 und 49 bzw. 51 und 52 des Portals 13 zu erzielen.

Beidseits der Laufrollenpaare 48, 49 sowie 51, 52, die an dem einen Lagerkasten 46 und an dem anderen Lagerkasten 47 gelagert sind, sind an diese in lichtem Abstand oberhalb der Führungsflächen 62 und 63 der Stahlbänder 64 bzw. 66 die Längsträger 33 und 34 des Maschinengestells 11 horizontal überquerende, zwischen diesen und den äußeren Längsrand-Bereichen des Maschinentisches 22 angeordnete Rechteck-Hohlprofilstücke 72 und 73 bzw. 74 und 76 befestigt, z.B. angeschweißt, deren innere freie Enden durch je eine hochkant-stehend angeordnete, der Grundform langgestrecktrechteckige Rahmenplatte 77 bzw. 78 miteinander verbunden sind, deren freie, obere und untere Längsränder 79 und 81 horizontal verlaufen, wie mit Bezug auf die eine Rahmenplatte 77 der Fig. 2 entnehmbar.

An den einander zugewandten Innenseiten dieser Rahmenplatten 77 und 78, sind, entlang deren unterer Längsrandbereiche in X-Richtung 12 horizontal verlaufende Zahnstangen 82 mit nach unten weisender Zahnung befestigt, mit denen Antriebsritzel 83 der Zahnstangentriebe 24 kämmen, die mittels eines einzigen, gestellfest angeordneten Vorschub-Antriebsmotors 84 synchron antreibbar sind, je nach der gewünschten Vorschub-Richtung, Plus-X-Richtung oder Minus-X-Richtung, mit alternativem Drehsinn.

Durch diese symmetrische Gestaltung des X-Vorschub-Antriebes 82, 83, 84 des Portals 13 wird, in Kombination mit der - erfindungsgemäß vorgesehenen - Ausbildung der Laufrollen 48 und 49 bzw. 51 und 52 als Außenringe von Pendelkugellagern, schon für sich gesehen, eine Geradführung des Portals in X-Richtung 12 erzielt, da sich die Außenringe, wenn das Portal 13 in X-Richtung verfahren wird - reibungsschlüssig - gleichsam selbsttätig in X-Richtung orientieren.

Ungeachtet dieses dem X-Vorschub-Antrieb 82, 83, 84 des Portals 13 innewohnenden "Tendenz" zur selbsttätigen Geradführung, ist es gleichwohl notwendig, die Geradführung auch durch formschlüssig wirkende Führungs-Mittel zu gewährleisten, da im Zuge einer Bearbeitung des Werkstückes 21 auf das Portal 13 wirkende Querkräfte als Reaktionskräfte auftreten, die kompensiert werden müssen. Hierzu genügt es jedoch - wegen der selbsttätigen Geradführungstendenz des Portals 13 - wenn derartige Führungsmittel nur an einer Portalseite, z.B. an einem der beiden Lagerkästen 46 oder 47 vorgesehen sind.

Zu diesem Zweck der - formschlüssigen - Geradführung des Portals 13 sind an dessen einem Lagerkasten 46 mit der aus der Figur 1 ersichtlichen Anordnung insgesamt vier Führungsrollen 86, 87, 88 und 89 vorgesehen, zu deren Erläuterung nunmehr auch auf die Einzelheiten der Figuren 3 und 4 verwiesen sei.

Diese Führungsrollen 86 und 88 sowie 87 und 89 sind mit vertikalem Verlauf ihrer Drehachsen 91 paarweise an den Rechteck-Hohlprofilstücken 72 bzw. 73 des einen Lagerkastens 46 des Portals 13 angeordnet, derart, daß sie die beiden äußeren Führungsrollen 86 und 87 an einer äußeren und die beiden inneren Führungsrollen 88 und 89 an einer inneren Längsführungsfläche 92 bzw. 93 abwälzen können, die sich über die Länge L des Führungsprofilstabes 67 des einen Längsträgers 33 des Maschinengestells 11 erstrecken.

Diese Längsführungsflächen 92 und 93 sind wiederum durch die Außenflächen dünner Stahlbänder 94 bzw. 96 gebildet, die auf die schmalen, vertikalen Längs-Begrenzungsflächen 97 bzw. 98 des Führungs-Profilstabes 67 aufgeklebt sind und sich über dessen gesamte Länge erstrecken.

Auch bei den Führungsrollen 86 bis 89 sind die sich an den Längsführungsflächen 92 bzw. 93 abwälzenden Rollenkörper die Außenringe von Pendel-Kugellagern, die sich jeweils in die - horizontale - Führungsrichtung selbsttätig orientieren. Die Innenringe 99 der die Führungsrollen 86 bis 89 bildenden Pendel-Kugellager sitzen, wie am besten der Figur 4 entnehmbar ist, auf einem Exzenter-Zapfen 101, dessen vertikale, zentrale Längsachse 105 die Drehachse der jeweiligen Führungsrolle markiert. Dieser Exzenter-Zapfen 101 ist, gemäß der Darstellung der Figur 4, an der Unterseite eines kreiszylindrischen Exzenter-Körpers 102 angeordnet, der in einer Bohrung 103 entsprechenden Durchmessers des unteren, horizontalen Schenkels 104 des Rechteck-Hohlprofils 72 des Lagerkastens 46 drehbar geführt und in vertikaler Richtung geringfügig verschiebbar ist.

Die Exzentrizität e des Exzenters 101, 102, d.h. der seitliche Abstand der zentralen Längsachse 105 des Exzenter-Zapfens 101 von der zentralen Längsachse 106 des Exzenterkörpers 102, die dessen Drehachse markiert, ist hinreichend groß bemessen, daß die Führungsrollen 86 bis 89 durch ein Verdrehen ihrer Exzenter 101, 102 stets in satte Anlage mit den ihnen zugeordneten Längsführungsflächen 92 bzw. 93 gebracht werden können.

Der Exzenterkörper 102 ist mit einem mit seiner Drehachse 106 koaxialen Gewindebolzen 107 versehen, der in einem Gewindestück 108, das z.B. an der Oberseite des oberen Querschenkels 109 des Rechteck-Hohlprofils 72 des Lagerkastens 46 befestigt ist und/oder in einer Gewindebohrung 111 dieses oberen Querschenkels 109 schraubbar geführt und mittels einer Kontermutter 112 in definierter Position - nach Drehung um die Längsachse 106 - feststellbar ist. Durch eine 180°-Drehung des Exzenterkörpers 102 um dessen Drehachse 106 kann somit die Drehachse 105 der jeweiligen Führungsrolle 86, 87, 88 und/oder 89 jeweils innerhalb einer "Streifenbreite" von 2 e bedarfsgerecht variiert werden, d.h. die jeweilige Führungsrolle in die Abwälz-Position justiert werden, wobei der Exzenterkörper 102 eine allenfalls einer halben Windungshöhe des Bolzengewindes entsprechende axiale Verschiebung erfährt. Beim dargestellten, speziellen Ausführungsbeispiel hat der Gewindebolzen an seinem über die Kontermutter 112 hinausragenden, freien Endabschnitt ein Vier- oder Sechskant-Profil 113, um das Verdrehen des Exzenters 101, 102 mittels eines üblichen Schraubenschlüssels durchführen zu können.

Es versteht sich, daß die vorstehend ihrem grundsätzlichen Aufbau nach umrissene Justier-Einrichtung für die Führungsrollen 86 bis 89 auch auf andere, technisch äquivalente Weise realisierbar ist.

Weiter versteht es sich, daß anstelle von Pendel-Kugellagern, z.B. gemäß DIN 630 auch zweireihige Pendel-Rollenlager, z.B. gemäß DIN 635 verwendet werden können, die gegenüber Pendel-Kugellagern den Vorteil einer größeren Tragfähigkeit haben, dafür aber nur geringere Führungs-Richtungs-Toleranzen ausgleichen kön-nen.

## Ansprüche

1. Führungsvorrichtung für das Portal einer in Portal-Bauweise erstellten Bearbeitungsmaschine für die Bearbeitung großer, Kantenlängen um 2 bis 4 m aufweisender Holz-, Sperrholz-, Preßspan- oder Kunststoff-Rohmaterialplatten, insbesondere eine Fräsmaschine oder eine Bohrmaschine, deren Werkzeugkopf quer zu der Bewegungsrichtung des Portals an diesem seinerseits gesteuert hin- und her-verfahrbar angeordnet ist, mit um portalfeste Drehachsen an diesen gelagerten Führungsrollen, die an einander gegenüberliegenden Führungsflächen eines Längsführungsprofils abwälzbar sind und mit an den Portalsäulen angeordneten Stützrollen, mittels derer das Portal verfahrbar an dem Maschinengestell abgestützt ist, wobei an jeder der Portalsäulen mindestens zwei solcher, durch die äußeren Ringe von Wälzlagern gebildete Stützrollen vorgesehen sind, die beidseits der den Schwerpunkt des Portals enthaltenden, vertikalen Quermittelebene des Portals in einem Abstand von dieser Ebene angeordnet und um parallel zu dieser verlaufende, horizontale Achsen drehbar sind und sich auf parallelen, horizontalen Stützflächen des Maschinengestells abwälzen können, dadurch gekennzeichnet, daß mindestens die Stützrollen (48, 49, 51 und 52) durch die äußeren Ringe von Pendel-Wälzlagern gebildet sind.

2. Führungsvorrichtung nach Anspruch 1, dadurch gekennzeichnet, daß auch die Führungsrollen (86 bis 89) durch die Außenringe von Pendel-Wälzlagern gebildet sind.

3. Führungsvorrichtung nach Anspruch 1 oder Anspruch 2, dadurch gekennzeichnet, daß die die Stützrollen (48, 49, 51 und 52) und/oder die die Führungsrollen (86 bis 89) bildenden Pendel-Wälzlager als Pendel-Kugellager ausgebildet sind.

4. Führungsvorrichtung nach einem der vorhergehenden Ansprüche, dadurch gekennzeichnet, daß die Laufflächen (62 und 63) für die Stützrollen (48, 49 bzw. 51 und 52) des Portals (13) durch die breiteren Längsflächen schmaler Stahlbänder (64 bzw. 66) aus gehärtetem Stahl gebildet sind, die auf Führungs-Profilstäbe (67 bzw. 68) aufgeklebt sind, vorzugsweise Aluminium-Profilstäbe mit flach-rechteckigem Profilquerschnitt, welche ihrerseits über eine dünne Schicht aus einer aushärtbaren Vergußmasse mit als Längsträger (33 bzw. 34) des Maschinengestells (11) ausgenutzten Rechteck-Hohlprofilen, vorzugsweise Stahl-Hohlprofilen, verbunden sind.

5. Führungsvorrichtung nach einem der vorhergehenden Ansprüche,
dadurch gekennzeichnet, daß die Stützrollen (48 und 49 bzw. 51 und 52) an den aufeinander zuweisenden, inneren freien Enden von Lagerbolzen (53) angeordnet sind, die in miteinander fluchtenden Bohrungen (54 und 56) in seitlichem Abstand voneinander angeordneter Schenkel-Wände (57 bzw. 58) von Hohlprofilen der Portalsäulen (31 bzw. 32) drehfest gehalten sind.

6. Führungsvorrichtung nach einem der vorhergehenden Ansprüche,
dadurch gekennzeichnet, daß die Führungsrollen (86 bis 89) tragende Lagerzapfen (101) exzentrisch bezüglich der Drehachsen (106) von Exzenterkörpern (102) angeordnet sind, die drehbar und in definierter Dreh-Stellung fixierbar an portalfesten Lagerkästen (46 bzw. 47) des Portals (13) angeordnet sind.

Fig.1

EP 0 343 617 A2

# Fig. 2

Fig. 3

Fig. 4

P 88 51